# NEUE EUROPÄISCHE PATENTSCHRIFT

(11) **EP 3 005 853 B2**
(45) Veröffentlichungstag und Bekanntmachung des Hinweises auf die Entscheidung über den Einspruch: **19.04.2023**
(45) Hinweis auf die Patenterteilung: 26.04.2017
(21) Anmeldenummer: 15186773.6
(22) Anmeldetag: 24.09.2015
(51) Int. Cl.: A01D 34/66, A01B 73/04

(54) **LANDWIRTSCHAFTLICHES ARBEITSGERÄT UND VERFAHREN ZUM BETREIBEN EINES LANDWIRTSCHAFTLICHEN ARBEITSGERÄTS**
AGRICULTURAL WORKING DEVICE AND METHOD FOR OPERATING AN AGRICULTURAL WORKING DEVICE
OUTIL AGRICOLE ET PROCEDE DE FONCTIONNEMENT D'UN OUTIL AGRICOLE

(30) Priorität: 07.10.2014 DE 102014114514
(43) Veröffentlichungstag der Anmeldung: 13.04.2016
(73) Patentinhaber: CLAAS Saulgau GmbH, 88348 Bad Saulgau (DE)
(72) Erfinder: Geng, Manfred, 88348 Bad Saulgau (DE)

(56) Entgegenhaltungen:
- EP-A1- 2 174 538
- EP-A1- 2 253 186
- EP-A1- 2 526 758
- EP-A2- 0 073 360
- WO-A1-03/079761
- WO-A1-2014/009652
- WO-A2-2006/011125
- DE-C2- 19 534 695
- FR-A1- 2 881 021
- "Pottinger Novadisc Novacat X8/V 10, Combinaison de fauche" In: "Salon International de la Machine Agricole SIMA 2013", 24 February 2013 (2013-02-24)

## Beschreibung

Die Erfindung betrifft ein wie im Oberbegriff des Heckmähwerk Anspruchs 1 definiertes landwirtschaftliches.

Ein wie eingangsgenanntes landwirtschaftliches Arbeitsgerät und ein Verfahren zum Betreiben eines landwirtschaftlichen Arbeitsgeräts sind z.B. aus DE 195 34 695 C2 bekannt. Das in diesem Dokument beschriebene Arbeitsgerät ist als seitenangehängtes Heckmähwerk ausgebildet zum Ankuppeln an einen Schlepper wie einen Traktor als landwirtschaftliche Arbeitsmaschine. Das Heckmähwerk ist dabei so konzipiert, dass in dieses bei Einhaltung einer für den Straßenverkehr zulässigen Transporthöhe und Transportbreite ein Mähbalken mit einer Länge bzw. Arbeitsbreite von größer als 3 m als Arbeitsorgan integriert werden kann.

Zu diesem Zweck kann das längliche Arbeitsorgan aus einer im Wesentlichen horizontalen bzw. liegenden Arbeitsstellung um einen Schwenkwinkel von 105-150 Grad in eine aufrechte Transportstellung verschwenkt werden, so dass der Schwerpunkt des Heckmähwerks in der Transportstellung in einem Bereich zwischen Rädern der Arbeitsmaschine und nahe an einer Längsachse durch den Schwerpunkt der Arbeitsmaschine liegt.

In jüngster Zeit werden nutzerseitig jedoch zunehmend Arbeitsorgane wie Mähbalken mit einer Länge bzw. Arbeitsbreite von größer als 3,50 m angefragt. Bei solch großen Arbeitsbreiten stoßen jedoch die bekannten konstruktiven Lösungen bei der Einhaltung der für den Straßenverkehr zulässigen Transportmaße, insbesondere der Transporthöhe, an ihre Grenzen.

Der Erfindung liegt daher die Aufgabe zugrunde, ein wie im Oberbegriff des Anspruchs 1 definiertes landwirtschaftliches Arbeitsgerät so fortzubilden, dass bei in der Transportstellung befindlichem Arbeitsorgan eine gegenüber dem Stand der Technik reduzierte Transporthöhe erzielbar ist.

Dies wird mit einem landwirtschaftlichen Arbeitsgerät gemäß Anspruch 1 erreicht. Weiterbildungen der Erfindung sind in den jeweiligen abhängigen Ansprüchen definiert.

Die Erfindung stellt ein landwirtschaftliches Heckmähwerk bereit, welches ein Traggestell und ein längliches Arbeitsorgan aufweist. Das Traggestell ist eingerichtet, um an ein Maschinenlängsende einer landwirtschaftlichen Arbeitsmaschine angekuppelt zu werden, so dass sich eine Längsrichtung des Traggestells quer zu einer Längsrichtung der Arbeitsmaschine erstreckt. Das Arbeitsorgan ist über eine Stelleinrichtung an einem Längsende des Traggestells um eine sich quer zur Längsrichtung des Traggestells erstreckende Schwenkachse schwenkbar angelenkt, so dass das Arbeitsorgan seiner Länge nach am Traggestell um einen vorbestimmten Schwenkwinkel zwischen einer Arbeitsstellung und einer Transportstellung verschwenkbar ist. Das erfindungsgemäße Heckmähwerk zeichnet sich dadurch aus, dass das die Stelleinrichtung eingerichtet ist, so dass das Arbeitsorgan zum Realisieren der Arbeitsstellung und der Transportstellung zusätzlich relativ zum Traggestell um ein vorbestimmtes Längenmaß längsverlagerbar ist.

Der Schwenkwinkel beträgt 110 Grad bis 150 Grad. Bevorzugt ist in der Arbeitsstellung das Arbeitsorgan seiner Länge nach im Wesentlichen horizontal bzw. liegend ausgerichtet und ist in der Transportstellung das Arbeitsorgan seiner Länge nach um den Schwenkwinkel nach oben verschwenkt aufgerichtet. Das Längenmaß für die Längsverlagerung des Arbeitsorgans beträgt 100 mm bis 500 mm.

Die Schwenkachse erstreckt sich in einem Zustand, in dem das Heckmähwerk an die Arbeitsmaschine angekuppelt ist, im Wesentlichen horizontal und in einer Längsrichtung bzw. Fahrtrichtung der Arbeitsmaschine.

Dadurch, dass das Arbeitsorgan zum Verlagern dessen von der Arbeitsstellung in die Transportstellung oder von der Transportstellung in die Arbeitsstellung mittels der Stelleinrichtung zusätzlich relativ zum Traggestell um das vorbestimmte Längenmaß längsverlagerbar ist, kann in der Transportstellung des Arbeitsorgans eine reduzierte Transporthöhe erzielt werden. Damit kann in das Heckmähwerk bei Einhaltung der für den Straßenverkehr zulässigen Transportmaße, insbesondere der Transporthöhe, z.B. ein Arbeitsorgan mit einer Länge bzw. Arbeitsbreite von größer als 3,50 m integriert werden.

Bevorzugt liegt außerdem in der Transportstellung des Arbeitsorgans ein Schwerpunkt des Heckmähwerks in etwa zwischen linken und rechten Rädern und nahe an einer Hinterachse der z.B. als Traktor ausgebildeten Arbeitsmaschine. Damit wird vorteilhaft sichergestellt, dass das Heckmähwerk, z.B. bei der Straßenfahrt die Fahreigenschaften der Arbeitsmaschine im Wesentlichen nicht negativ beeinflusst.

Gemäß einer Ausführungsform des erfindungsgemäßen Heckmähwerks ist die Stelleinrichtung eingerichtet, so dass zum insbesondere linearen Längsverlagern des Arbeitsorgans eine Position der Schwenkachse bezüglich des Arbeitsorgans linear verlagerbar ist.

Zusätzlich oder alternativ dazu ist gemäß einer weiteren Ausführungsform des erfindungsgemäßen Heckmähwerks die Stelleinrichtung eingerichtet, so dass zum insbesondere linearen Längsverlagern des Arbeitsorgans eine Position der Schwenkachse bezüglich des Traggestells linear verlagerbar ist.

Gemäß noch einer Ausführungsform des erfindungsgemäßen Heckmähwerks weist die Stelleinrichtung zum Verschwenken des Arbeitsorgans ein die Schwenkachse bereitstellendes Schwenklager und zum insbesondere linearen Längsverlagern des Arbeitsorgans ein Linearlager auf, wobei das Schwenklager und das Linearlager mechanisch in Reihe geschaltet sind.

Das Linearlager ist bevorzugt zweiteilig ausgebildet und kann z.B. eine Teleskopeinrichtung wie eine Kolben-Zylinder-Einheit oder eine Linearführung mit einem darauf geführten Linearschlitten aufweisen. Auch das Schwenklager ist bevorzugt zweiteilig ausgebildet und kann z.B. eine Kombination von Lagerbolzen und Lagerbuchse aufweisen.

Gemäß noch einer weiteren Ausführungsform des erfindungsgemäßen Heckmähwerks weist die Stelleinrichtung zum Verschwenken des Arbeitsorgans ein die Schwenkachse bereitstellendes Schwenklager und zum Längsverlagern des Arbeitsorgans eine Schwinge auf, wobei das Schwenklager und die Schwinge mechanisch in Reihe geschaltet sind. Eine Länge der Schwinge gibt dann bevorzugt das Längenmaß für die Längsverlagerung des Arbeitsorgans vor.

Es wird auch ein nicht beanspruchtes Verfahren zum Betreiben eines landwirtschaftlichen Heckmähwerks gemäß einer, mehreren oder allen zuvor beschriebenen Ausführungsformen der Erfindung in jeder denkbaren Kombination, bereitgestellt. Das Verfahren dient dazu, ein längliches Arbeitsorgan des an ein Maschinenlängsende einer landwirtschaftlichen Arbeitsmaschine angekuppelten Heckmähwerks zwischen einer Arbeitsstellung und einer Transportstellung zu verlagern. Gemäß dem Verfahren wird das Arbeitsorgan, um es von der Arbeitsstellung in die Transportstellung oder von der Transportstellung in die Arbeitsstellung zu verlagern, um einen vorbestimmten Schwenkwinkel seiner Länge nach um eine sich in einer Längsrichtung der Arbeitsmaschine erstreckende Schwenkachse verschwenkt. Das Verfahren zeichnet sich dadurch aus, dass das Arbeitsorgan zum Verlagern von der Arbeitsstellung in die Transportstellung und von der Transportstellung in die Arbeitsstellung zusätzlich um ein vorbestimmtes Längenmaß relativ zur Arbeitsmaschine längsverlagert wird.

Der Schwenkwinkel beträgt 110 Grad bis 150 Grad. Bevorzugt ist in der Arbeitsstellung das Arbeitsorgan seiner Länge nach im Wesentlichen horizontal bzw. liegend ausgerichtet und ist in der Transportstellung das Arbeitsorgan seiner Länge nach um den Schwenkwinkel nach oben verschwenkt aufgerichtet. Das Längenmaß für die Längsverlagerung des Arbeitsorgans beträgt 100 mm bis 500 mm.

Die Schwenkachse erstreckt sich in einem Zustand, in dem das Heckmähwerk an die Arbeitsmaschine angekuppelt ist, im Wesentlichen horizontal und in einer Längsrichtung bzw. Fahrtrichtung der Arbeitsmaschine.

Dadurch, dass das Arbeitsorgan zum Realisieren der Arbeitsstellung und der Transportstellung zusätzlich um das vorbestimmte Längenmaß relativ zur Arbeitsmaschine verlagert wird, kann in der Transportstellung des Arbeitsorgans eine reduzierte Transporthöhe erzielt werden. Damit kann in das Heckmähwerk bei Einhaltung der für den Straßenverkehr zulässigen Transportmaße, insbesondere der Transporthöhe, z.B. ein Arbeitsorgan mit einer Länge bzw. Arbeitsbreite von größer als 3,50 m integriert werden.

Gemäß dem Verfahren wird das Längsverlagern des Arbeitsorgans dem Verschwenken des Arbeitsorgans überlagert. Damit kann das Verlagern des Arbeitsorgans von der Arbeitsstellung in die Transportstellung und von der Transportstellung in die Arbeitsstellung ohne zusätzlichen Zeitaufwand für die Längsverlagerung realisiert werden.

Gemäß einer weiteren Ausführungsform des Verfahrens wird das Längsverlagern des Arbeitsorgans mittels einer zusätzlichen Schwenkbewegung realisiert.

Gemäß noch einer Ausführungsform des Verfahrens wird das Längsverlagern des Arbeitsorgans realisiert, indem die Schwenkachse relativ zur Arbeitsmaschine linear verlagert wird und damit auch das Arbeitsorgan relativ zur Arbeitsmaschine linear verlagert wird.

Gemäß noch einer weiteren Ausführungsform des Verfahrens wird das Längsverlagern des Arbeitsorgans realisiert, indem das Arbeitsorgan relativ zur Schwenkachse linear verlagert und damit auch relativ zur Arbeitsmaschine linear verlagert wird.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand bevorzugter Ausführungsformen und unter Bezugnahme auf die Zeichnung detaillierter beschrieben.

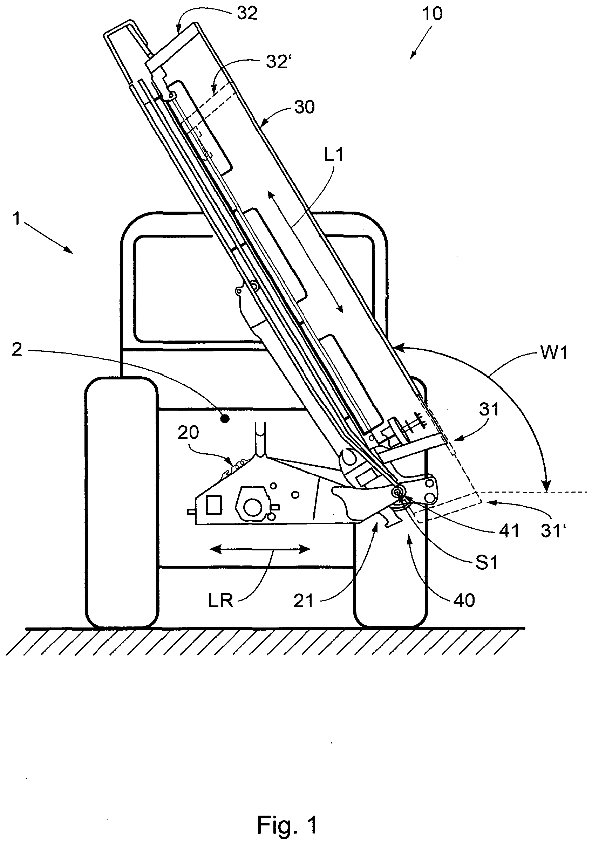

- Fig. 1: zeigt eine schematische Heckansicht einer mit einem landwirtschaftlichen Heckmähwerk gemäß einer Ausführungsform der Erfindung gekuppelten landwirtschaftlichen Arbeitsmaschine.

Im Folgenden wird unter Bezugnahme auf Fig. 1 ein gemäß einer Ausführungsform der Erfindung ausgebildetes landwirtschaftliches Heckmähwerk 10 zum Ankuppeln an eine selbstfahrende landwirtschaftliche Arbeitsmaschine 1 beschrieben werden.

Gemäß der gezeigten Ausführungsform der Erfindung ist die Arbeitsmaschine 1 als Traktor ausgebildet, welcher an seiner ein Maschinenlängsende definierenden Heckseite 2 eine Dreipunktaufnahme (nicht gezeigt) mit drei Fanghaken aufweist. Das Heckmähwerk 10 ist als bezüglich der Arbeitsmaschine 1 seitenaufgehängtes Heckmähwerk ausgebildet und weist ein Traggestell 20 und ein längliches Arbeitsorgan 30 auf.

Das Traggestell 20 ist als Dreipunktbock ausgebildet und weist eine Mehrzahl von jeweils in Form eines Eingriffsprofils ausgebildeten Kuppelelementen (nicht separat bezeichnet) auf, die zum mechanischen Ankuppeln an die Dreipunktaufnahme der Arbeitsmaschine 1 mit den Fanghaken der Dreipunktaufnahme in Eingriff gebracht bzw. gekuppelt sind. Demnach ist das Traggestell 20 eingerichtet, um an das Maschinenlängsende bzw. die Heckseite 2 der Arbeitsmaschine 1 angekuppelt zu werden, so dass sich eine Längsrichtung LR des Traggestells 20 quer bzw. senkrecht zu einer Längsrichtung (senkrecht zur Figurenebene der Fig. 1 verlaufend) der Arbeitsmaschine 1 erstreckt

Das Arbeitsorgan 30 ist als Mähbalken ausgebildet und über eine Stelleinrichtung 40 an einem Längsende 21 des Traggestells 20 um eine sich quer zur Längsrichtung LR des Traggestells 20 erstreckende Schwenkachse S1 schwenkbar angelenkt. Genauer ist das Arbeitsorgan 30 so am Längsende 21 des Traggestells 20 schwenkbar angelenkt, dass das Arbeitsorgan 30 seiner Länge nach am Traggestell 20 um einen vorbestimmten Schwenkwinkel W1 von 110 Grad bis 150 Grad, zwischen einer im Wesentlichen horizontalen bzw. liegenden Arbeitsstellung und einer aufrechten Transportstellung (wie in Fig. 1 gezeigt) verschwenkbar ist. Die Schwenkachse S1 erstreckt sich dabei in einem Zustand, in dem das Arbeitsgerät 10 wie in Fig. 1 gezeigt an die Arbeitsmaschine 1 angekuppelt ist, im Wesentlichen horizontal und in Längsrichtung bzw. Fahrtrichtung der Arbeitsmaschine 1.

Um für die in Fig. 1 gezeigte Transportstellung des Arbeitsorgans 30 eine reduzierte Transporthöhe zu erzielen, ist die Stelleinrichtung 40 außerdem eingerichtet, so dass das Arbeitsorgan 30 zwischen der Arbeitsstellung und der Transportstellung relativ zum Traggestell 20 und damit relativ zur Arbeitsmaschine 1 um ein vorbestimmtes Längenmaß (100 mm bis 500 mm) längsverlagerbar ist, wie durch einen Doppelpfeil L1 in Fig. 1 gezeigt.

Für die Transportstellung wird das Arbeitsorgan 30 um das vorbestimmte Längenmaß L1 nach unten längsverlagert, so dass ein unteres Längsende 31 und ein oberes Längsende 32 des Arbeitsorgans 30 auf weiter unten liegende in Fig. 1 jeweils mit gestrichelter Kontur dargestellte Positionen von unterem und oberem Längsende 31', 32' verlagert werden. Für die Arbeitsstellung wird das Arbeitsorgan 30 wieder um das vorbestimmte Längenmaß L1 nach oben längsverlagert, so dass das untere Längsende 31 und das obere Längsende 32 des Arbeitsorgans 30 wieder auf ihre weiter oben liegenden in Fig. 1 jeweils mit Volllinienkontur dargestellten Positionen von unterem und oberem Längsende 31, 32 verlagert werden. Gemäß der Erfindung kann die Längsverlagerung des Arbeitsorgans 30 für die Transportstellung oder die Arbeitsstellung natürlich auch in der im Wesentlichen horizontalen Schwenkposition der Arbeitsstellung oder in einer zwischen der Schwenkposition der Arbeitsstellung und der Schwenkposition der Transportstellung befindlichen Zwischenposition erfolgen.
Wesentlich ist dabei, dass das Arbeitsorgan 30 eines erfindungsgemäßen Mähwerks zumindest in der Transportstellung so längs verlagerbar ist, dass das obere Längsende 32 abgesenkt werden kann und die Transporthöhe reduziert wird.

Gemäß der in Fig. 1 dargestellten Ausführungsform ist die Stelleinrichtung 40 so eingerichtet, dass zum um das vorbestimmte Längenmaß L1 Längsverlagern des Arbeitsorgans 30 eine Position der Schwenkachse S1 bezüglich des Arbeitsorgans 30 linear verlagerbar ist und damit das Arbeitsorgan 30 relativ zum Traggestell 20 bzw. relativ zur Arbeitsmaschine 1 linear verlagerbar ist. Genauer weist die Stelleinrichtung 40 zum Verschwenken des Arbeitsorgans 30 ein die Schwenkachse S1 bereitstellendes Schwenklager 41 und zum linearen Längsverlagern des Arbeitsorgans 30 ein Linearlager (nicht gezeigt) auf, wobei das Schwenklager 41 und das Linearlager mechanisch in Reihe geschaltet sind.

Das Linearlager ist bevorzugt zweiteilig ausgebildet und kann z.B. eine Teleskopeinrichtung wie einen Hydraulikzylinder oder eine Linearführung mit einem darauf geführten Linearschlitten aufweisen. Auch das Schwenklager ist bevorzugt zweiteilig ausgebildet und kann z.B. eine Kombination von Lagerbolzen und Lagerbuchse aufweisen.

Obwohl in Fig. 1 nicht dargestellt, ist gemäß der gezeigten Ausführungsform der eine Teil des Linearlagers am Arbeitsorgan 30 angebracht und ist der andere Teil des Linearlagers mechanisch mit einem arbeitsorganseitigen Teil (nicht separat bezeichnet) des Schwenklagers 41 verbunden. Der traggestellseitige Teil des Schwenklagers 41 ist dabei in das Längsende 21 des Traggestells integriert.

Gemäß einer nicht dargestellten ersten alternativen Ausführungsform könnte die Stelleinrichtung 40 auch eingerichtet sein, so dass zum Längsverlagern des Arbeitsorgans 30 eine Position der Schwenkachse S1 bezüglich des Traggestells 20 linear verlagerbar ist und damit auch das Arbeitsorgan 30 relativ zur Arbeitsmaschine 1 linear verlagerbar. In diesem Fall wäre dann in Umkehr der obigen Konstruktion das Linearlager am Traggestell 20 angebracht und würde das Schwenklager lagern.

Gemäß einer zweiten alternativen Ausführungsform könnte die Stelleinrichtung 40 zum Verschwenken des Arbeitsorgans 30 das die Schwenkachse S1 bereitstellende Schwenklager 41 und zum Längsverlagern des Arbeitsorgans 30 eine längliche Schwinge (nicht dargestellt) aufweisen, wobei das Schwenklager 41 und die Schwinge mechanisch in Reihe geschaltet wären. Dabei wäre z.B. ein Längsende der Schwinge schwenkbar am Arbeitsorgan 30 angelenkt und wäre das andere Längsende der Schwinge schwenkbar am Schwenklager 41 angelenkt, wobei die Länge der Schwinge das Längenmaß L1 für die Längsverlagerung vorgeben würde.

Um die Schwenkbewegung und die Längsverlagerungsbewegung des Arbeitsorgans 30 jeweils gesteuert anzutreiben, weist die Stelleinrichtung 40 bevorzugt jeweilige hydraulische Antriebe (nicht gezeigt) wie Hydraulikzylinder auf, welche an ein Hydrauliksystem (nicht gezeigt) der Arbeitsmaschine 1 anschließbar bzw. angeschlossen sind.

Aus der obigen Beschreibung lassen sich auch Ausführungsformen eines nicht beanspruchten Verfahrens zum Betreiben (im Folgenden Betriebsverfahren genannt) des landwirtschaftlichen Heckmähwerks 10 entnehmen, um das längliche Arbeitsorgan 30 des an das Maschinenlängsende bzw. die Heckseite 2 der landwirtschaftlichen Arbeitsmaschine 1 angekuppelten Heckmähwerks 10 zwischen der Arbeitsstellung und der Transportstellung zu verlagern.

Nach dem Betriebsverfahren wird zum Verlagern des Arbeitsorgans 30 von der Arbeitsstellung in die Transportstellung oder von der Transportstellung in die Arbeitsstellung das Arbeitsorgan 30 um den vorbestimmten Schwenkwinkel W1 seiner Länge nach um die sich in Längsrichtung der Arbeitsmaschine 1 erstreckende Schwenkachse S1 verschwenkt. Außerdem wird das Arbeitsorgan 30 um das vorbestimmte Längenmaß L1 relativ zur Arbeitsmaschine 1 längsverlagert.

Bei dem erfindungsgemäßen Betriebsverfahren wird das Längsverlagern des Arbeitsorgans 30 dem Verschwenken des Arbeitsorgans 30 überlagert.

Unter Nutzung der in Fig. 1 gezeigten Ausführungsform des Arbeitsgeräts 10 wird bei dem Betriebsverfahren das Längsverlagern des Arbeitsorgans 30 bevorzugt realisiert, indem das Arbeitsorgan 30 relativ zur Schwenkachse S1 linear verlagert wird.

Unter Nutzung der ersten alternativen Ausführungsform des Heckmahwerks 10 kann bei dem Betriebsverfahren das Längsverlagern des Arbeitsorgans 30 auch realisiert werden, indem die Schwenkachse S1 relativ zur Arbeitsmaschine 1 linear verlagert wird.

Unter Nutzung der zweiten alternativen Ausführungsform des Heckmähwerks 10 kann bei dem Betriebsverfahren das Längsverlagern des Arbeitsorgans 30 auch mittels einer zusätzlichen Schwenkbewegung (nämlich z.B. der Schwinge um die Schwenkachse S1) realisiert werden.

### Bezugszeichenliste

- 1: landwirtschaftliche Arbeitsmaschine
- 2: Heckseite / Maschinenlängsende
- 10: landwirtschaftliches Heckmähwerk
- 20: Traggestell
- 21: Längsende
- 30: Arbeitsorgan
- 31, 31': Längsende
- 32, 32': Längsende
- 40: Stelleinrichtung
- 41: Schwenklager
- LR: Längsrichtung
- L1: Längenmaß
- S1: Schwenkachse
- W1: Schwenkwinkel

## Patentansprüche

1. Landwirtschaftliches Heckmähwerk (10) mit:
einem Traggestell (20), welches eingerichtet ist, um an ein Maschinenlängsende (2) einer landwirtschaftlichen Arbeitsmaschine (1) angekuppelt zu werden, so dass sich eine Längsrichtung (LR) des Traggestells (20) quer zu einer Längsrichtung der Arbeitsmaschine (1) erstreckt, und
einem länglichen Arbeitsorgan (30), das über eine Stelleinrichtung (40) an einem Längsende (21) des Traggestells (20) um eine sich quer zur Längsrichtung (LR) des Traggestells (20) erstreckende Schwenkachse (S1) schwenkbar angelenkt ist, so dass das Arbeitsorgan (30) seiner Länge nach am Traggestell (20) um einen vorbestimmten Schwenkwinkel (W1) zwischen einer Arbeitsstellung und einer Transportstellung verschwenkbar ist,
wobei die Stelleinrichtung (40) so eingerichtet ist, dass das Arbeitsorgan (30) zumindest in der Transportstellung relativ zum Traggestell (20) um ein vorbestimmtes Längenmaß (L1) längsverlagerbar ist,
**dadurch gekennzeichnet, dass** der Schwenkwinkel (W1) 110 Grad bis 150 Grad und die Längsverlagerung des Arbeitsorgans 100 mm bis 500 mm beträgt.

2. Heckmähwerk (10) gemäß Anspruch 1, wobei die Stelleinrichtung (40) eingerichtet ist, so dass zum Längsverlagern des Arbeitsorgans (30) eine Position der Schwenkachse (S1) bezüglich des Arbeitsorgans (30) linear verlagerbar ist.

3. Heckmähwerk (10) gemäß Anspruch 1 oder 2, wobei die Stelleinrichtung (40) eingerichtet ist, so dass zum Längsverlagern des Arbeitsorgans (30) eine Position der Schwenkachse (S1) bezüglich des Traggestells (20) linear verlagerbar ist.

4. Heckmähwerk (10) gemäß einem der Ansprüche 1 bis 3, wobei die Stelleinrichtung (40) zum Verschwenken des Arbeitsorgans (30) ein die Schwenkachse (S1) bereitstellendes Schwenklager (41) und zum Längsverlagern des Arbeitsorgans (30) ein Linearlager aufweist, und wobei das Schwenklager (41) und das Linearlager mechanisch in Reihe geschaltet sind.

5. Heckmähwerk (10) gemäß einem der Ansprüche 1 bis 3, wobei die Stelleinrichtung (40) zum Verschwenken des Arbeitsorgans (30) ein die Schwenkachse (S1) bereitstellendes Schwenklager (41) und zum Längsverlagern; des Arbeitsorgans (30) eine Schwinge aufweist, und wobei das Schwenklager (41) und die Schwinge mechanisch in Reihe geschaltet sind.

## Claims

1. An agricultural rear mower (10) comprising:
a support frame (20) adapted to be coupled to a longitudinal end (2) of an agricultural working machine (1) so that a longitudinal direction (LR) of the support frame (20) extends transversely relative to a longitudinal direction of the working machine (1), and
an elongate working member (30) which is mounted by way of an actuating device (40) to a longitudinal end (21) of the support frame (20) pivotably about a pivot axis (S1) extending transversely relative to the longitudinal direction (LR) of the support frame (20) so that the working member (30) is pivotable in accordance with its length on the support frame (20) through a predetermined pivot angle (W1) between a working position and a transport position,
wherein the actuating device (40) is so adapted that at least in the transport position the working member (30) is longitudinally displaceable relative to the support frame (20) by a predetermined lengthwise travel (L1),
**characterised in that** the pivoting angle (W1) is 110 degrees to 150 degrees and the longitudinal displacement of the working member is 100 mm to 500 mm.

2. A rear mower (10) according to claim 1 wherein the actuating device (40) is so adapted that for longitudinal displacement of the working member (30) a position of the pivot axis (S1) is linearly displaceable with respect to the working member (30).

3. A rear mower (10) according to claim 1 or claim 2 wherein the actuating device (40) is so adapted that for longitudinal displacement of the working member (30) a position of the pivot axis (S1) is linearly displaceable with respect to the support frame (20).

4. A rear mower (10) according to one of claims 1 to 3 wherein the actuating device (40) has a pivot mounting (41) providing the pivot axis (S1) for the pivotal movement of the working member (30) and a linear mounting for the longitudinal displacement of the working member (30) and wherein the pivot mounting (41) and the linear mounting are mechanically connected in series.

5. A rear mower (10) according to one of claims 1 to 3 wherein the actuating device (40) has a pivot mounting (41) providing the pivot axis (S1) for the pivotal movement of the working member (30) and a swing arm for the longitudinal displacement of the working member (30) and wherein the pivot mounting (41) and the swing arm are mechanically connected in series.

## Revendications

1. Faucheuse à l'arrière agricole (10) comprenant un châssis porteur (20) qui est conçu pour être accouplé à une extrémité longitudinale d'engin (2) d'un engin agricole (1), de façon qu'une direction longitudinale (LR) du châssis porteur (20) s'étende transversalement à une direction longitudinale de l'engin (1), et comprenant un organe de travail allongé (30) qui, par l'intermédiaire d'un dispositif de positionnement (40), est articulé sur une extrémité longitudinale (21) du châssis porteur (20) de manière pivotante autour d'un axe de pivotement (S1) s'étendant transversalement à la direction longitudinale (LR) du châssis porteur (20), de façon que l'organe de travail (30) puisse pivoter dans le sens de la longueur sur le châssis porteur (20) selon un angle de pivotement prédéterminé (W1) entre une position de travail et une position de transport, lequel dispositif de positionnement (40) est conçu de façon que, au moins dans la position de transport, l'organe de travail (30) soit déplaçable en longueur selon une longueur prédéterminée (L1) par rapport au châssis porteur (20), **caractérisé en ce que** l'angle de pivotement (W1) est de 110 degrés à 150 degrés et le déplacement longitudinal de l'organe de travail est de 100 mm à 500 mm.

2. Faucheuse à l'arrière (10) selon la revendication 1, le dispositif de positionnement (40) étant conçu de façon que, pour le déplacement en longueur de l'organe de travail (30), une position de l'axe de pivotement (S1) soit déplaçable linéairement par rapport à l'organe de travail (30).

3. Faucheuse à l'arrière (10) selon la revendication 1 ou 2, le dispositif de positionnement (40) étant conçu de façon que, pour le déplacement longitudinal de l'organe de travail (30), une position de l'axe de pivotement (S1) soit déplaçable linéairement par rapport au châssis porteur (20).

4. Faucheuse à l'arrière (10) selon une des revendications 1 à 3, **caractérisé en ce que** le dispositif de positionnement (40) comporte, pour le pivotement de l'organe de travail (30), un palier de pivotement (41) constituant l'axe de pivotement (S1) et, pour le déplacement longitudinal de l'organe de travail (30), un palier linéaire, et le palier de pivotement (41) et le palier linéaire étant montés mécaniquement en série.

5. Faucheuse à l'arrière (10) selon une des revendications 1 à 3, le dispositif de positionnement (40) comportant, pour le pivotement de l'organe de travail (30), un palier de pivotement (41) constituant l'axe de pivotement (S1) et, pour le déplacement longitudinal de l'organe de travail (30), une coulisse, et le palier de pivotement (41) et la coulisse étant montés mécaniquement en série.
